# EUROPEAN PATENT APPLICATION

(11) **EP 2 687 389 A1**
(43) Date of publication of application: **22.01.2014**
(21) Application number: 12757024.0
(22) Date of filing: 14.03.2012
(51) Int. Cl.: B60G 7/00

(54) **COUPLING ARM FOR VEHICLE**

(30) Priority: 14.03.2011 JP 2011055474
(71) Applicant: Yorozu Corporation, Yokohama-shi, Kanagawa 222-8560 (JP)
(72) Inventor: MATSUMOTO, Masaharu, Yokohama-shi, Kanagawa 222-8560 (JP)
(74) Representative: Martin, Didier Roland Valéry
(86) International application number: PCT/JP2012/056574
(87) International publication number: WO 2012/124734

(57) **Abstract**

[Problem] To provide a coupling arm for a vehicle, said coupling arm being lightweight, having a strength that withstands both tensile force and compressive force, being easy and cost effective to manufacture, and being formed from a highly reliable composite material. [Solution] Form an embossed section (13) which bulges toward the inner direction in a framework plate (7) formed from at least a pair of thin metallic plates arranged facing one another, and due to a concave section (18) formed on the outside surface of an intermediate member (8) interlocking with the embossed section (13), when twisting force, tensile force or compressive force acts on the coupling arm for a vehicle from two shaft members (J1, J2), the framework plate (7) counteracts tensile force, the resin intermediate member (8) and an external plate member (9) counteract compressive force, and mainly the intermediate member (8) and the framework plate (7) counteract twisting force, and thus strength for withstanding each of the forces is provided.

## Description

### [Technical Field]

The present invention relates to a connecting arm for vehicles that is light and deformation-resistant

### [Background Technology]

For example, various connecting arms are used in the suspension system of automobiles such as control arms and trailing arms equipped with rubber bushings and ball joints mounted on the ends.

Although those connecting arms have historically been made of ferrous metallic materials, various other components made of composite materials consisting of plastic materials and metals have come to be proposed to meet the demand for weight reduction.

For example, Patent Document 1 shown below discloses a suspension arm that connects between automobile body-side and wheel-side, comprising: body-side and wheel-side end parts made of a ferrous material, and a member made of light-weight Styrofoam connecting the two ends, wherein the end members and the Styrofoam member are sandwiched by formed plates placed on top and bottom of which to bond them closely together, which is further covered by a member made of carbon reinforced resin fibers.

Patent Document 2 shown below discloses a generally light weight high rigidity link structure to be used for robotics and the like comprising members made of metallic materials where forces are applied, as well as members made of lesser amount of metals and more amount of plastic materials depending on how far they are from the points where forces apply.

### [Prior Art Documents]

### [Patent Document]

[Patent Document 1] Publication No JP, 10-109511, A (1998) [Patent Document 2] Publication No JP, 10-202561, A (1998)

### [SUMMARY]

### [Problems to be solved by the invention]

Such a link or arm is normally called a composite arm as it is made of a combination of ferrous metallic materials and plastic materials, and is effective in achieving the goal of weight reduction for vehicle components, but presents concerns in terms of strength reliability to be used as a connecting arm for vehicles.

For example, in case of an arm that connects with a pair of shaft members whose axis are parallel with each other (hereinafter called "axially straight arm"), or in some cases, an arm that connects with shaft members whose axis cross with each other perpendicularly or at a specific cross angle, torsional, tensile or compressive forces may be applied while the vehicle is in motion, so that such an arm must have a sufficient strength to withstand those forces, not just being light-weighted.

In the meanwhile, the aforementioned composite arm lacks sufficient strength and reliability to resist said forces because its middle part is built of a plastic material, thus lacking a metallic member that extends for the entire length of the arm, although its parts on its both ends that connect with the shafts are made of metallic materials. In addition, the connecting arm using a plastic material typically has to use a fiber-reinforced plastic material, so that it is more complicated to manufacture and is less satisfactory from the cost standpoint.

The present invention is intended to solve the aforementioned problem of the prior art to provide a connecting arm for vehicles made of composite materials that is light-weighted, provides a sufficient strength against torsional, tensile and compressive forces, is less likely to deform, highly reliable, easy to manufacture, and advantageous from the cost standpoint.

### [Means for solving problems]

One aspect of the present invention to accomplish the above-mentioned intention is a connecting arm for vehicles having a first shaft member inserted through a communicating hole provided on one end, a second shaft member inserted through a communicating hole provided on another end, subjected to torsional, tensile, or compressive forces applied by said both shaft members, which is characterized by comprising: structural plates consisting of at least a pair of metal thin plates that are facing against each other and are provided at ends with communicating holes through which said first shaft member and second shaft member are inserted; a plastic intermediate member provided between said structural plates; and plastic external plate members provided on an outside of each one of said structural plates to sandwich each one of said structural plates with said intermediate member, wherein an embossed part is formed on each said structural plate to protrude inwardly and a concave part formed on the external surface of said intermediate member is fitted with said embossed part.

### [Effect of the invention]

According to the present invention, an inwardly protruding embossed part is formed on each of structural plates consisting at least a pair of metal thin plates provided to face with each other, and a concave part formed on both outer side surfaces of each intermediated member is fitted onto said embossed part, so that, when torsional, tensile, or compressive forces are applied by both axial members to the connecting arm for vehicles, the structural plates provide strength primarily against tensile forces, the intermediate member and external plate members both made of plastic materials provide strength against compressive forces, and the intermediate member and structural plates provide strength against torsional forces, respectively, thus providing strength against all of those forces. Therefore, the connecting arm for vehicles not only becomes lighter, but also becomes more resistant against deformation and provides a high reliability. Moreover, since it can be produced in such a manner as to overlay the structural plates, the intermediate member, and the external plate members upon each other, the production can be done more easily and cost-effectively.

The embossed part should preferably be formed to extend from one of the communicating holes to the other of the communicating holes of said structural plate. Thus, the entire structural plates are reinforced by the embossed part, so that it provides a high strength against tensile and torsional forces.

Each external plate member should preferably be formed on its inside with a convex part that fits into the embossed part of the structural plates. Thus, the external plate members closely fit with the structural plates, so that the external plate members prevent deformations of the structural plates from the outside. This makes the entire structure of the connecting arm for vehicles more compact and aesthetically more agreeable as well.

The intermediate member and the external plate members should preferably be formed integrally to cover the structural plates. Thus, this connecting arm for vehicles can be easily formed and manufactured.

The structural plates should preferably be formed identical to each other. Thus, this connecting arm for vehicles can be formed economically.

The first shaft member and the second shaft member should preferably be constituted to have their axes parallel to each other. Thus, the arm is made as a flat and compact axially straight arm, which is light, strong enough to withstand any torsional, tensile or compression force, deformation resistant, reliable, easily manufactured, and is cost effective.

The objects, features, and characteristics of this invention other than those set forth above will become apparent from the description given herein below with reference to preferred embodiments illustrated in the accompanying drawings.

### [Brief description of drawing]

[Fig. 1] Fig. 1 is a perspective view showing a connecting arm for vehicles according to an embodiment of the present invention.
[Fig. 2] Fig. 2 is an exploded perspective view of the connecting arm for vehicles.
[Fig. 3] Fig. 3 is a cross-sectional view taken on line 3-3 of Fig. 1.
[Fig. 4] Fig. 4 is a cross-sectional view taken on line 4-4 of Fig. 1.
[Fig. 5] Fig. 5 is a schematic cross-section of the embossed part of the structural plate.

### [Working example of invention]

The embodiments of the present invention will be described in detail below with reference to the accompanying drawings.

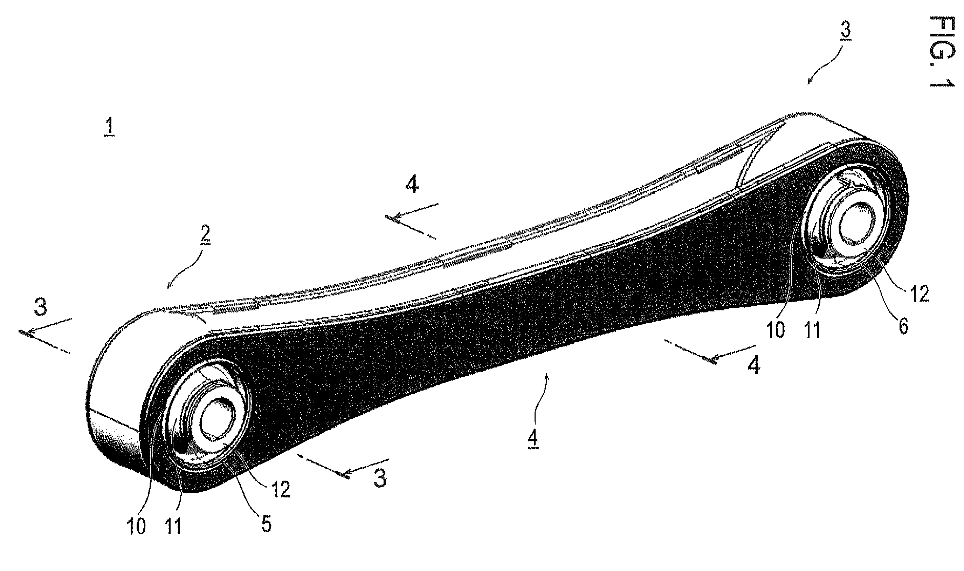

The connecting arm for vehicles according to the present invention is a suspension arm to be used in the suspension mechanism of a car, wherein one end of which is connected to the sub frame (not shown) while the other end is attached to the wheel side. As shown in Fig. 1, the connecting arm for vehicles 1 has both end parts 2 and 3 having semicircular shapes and a middle part 4 having a gradually arcing shape, thus forming a substantially oblong shape as a whole, with communicating holes 5 and 6 provided on both end parts 2 and 3.

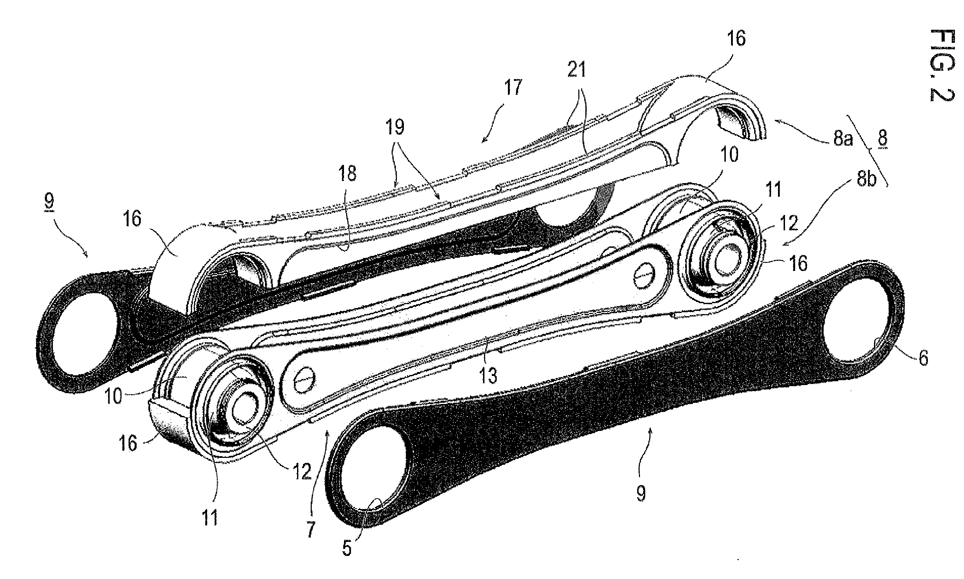

As shown in Fig. 2, this connecting arm for vehicles 1 comprises: structural plates 7 that constitute the particular arm's structure as they are provided for the entire length of the arm to reinforce it and consist of a pair of steel plates (e.g., thin high tensile strength steel plates) facing each other; plastic intermediate member 8 provided for the entire length between both structural plates 7, and plastic external plates 9 provided on the outer side of each structural plates 7.

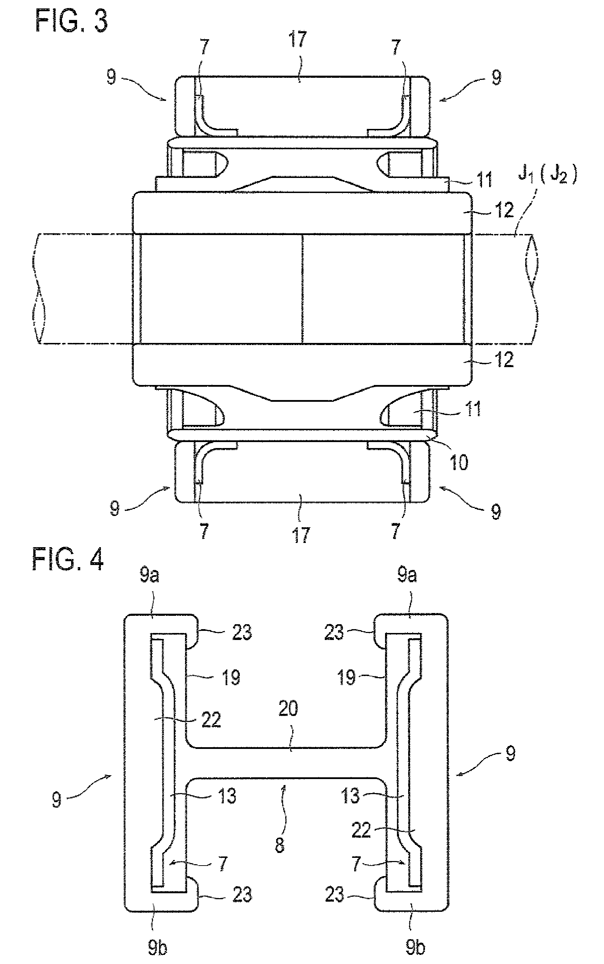

Collar members 10 are press fitted into the communicating holes 5 and 6 located at both ends 2 and 3, where cylindrical collars 12 are provided inside the collar members 10 via vibration isolating members 11 as shown in Fig. 3.

The embossed part 13 is provided as shown in Figs. 2 and 4 in order to provide resistance against a possibility of buckling of the structural plates 7, which are made of thin plates in order to reduce their weights, resulting from a compression force in the axial direction. The embossed part 13 is created by forming the structural plate 7 between the communicating holes 5 and 6 to protrude inwardly by a small amount as shown in Fig. 4.

By forming the embossed part 13 inwardly protruding as such, even if the structural plates 7 happened to buckle under a compression force in the axial direction, the deforming does not occur outwardly but rather always deforming inwardly. Thus, by setting up the plastic intermediate member 8 with a high capacity of compression resistance between the two structural plates 7, the buckling of the structural plates 7 can be securely prevented by the intermediate member 8. Therefore, in this embodiment, the plastic intermediate member 8 is disposed between the pair of structural plates 7 in order to assist the prevention of the buckling of the structural plates 7.

Moreover, the structural plates 7 are sandwiched between the plastic intermediate member 8 and the external plate members 9 so that this sandwiching restrains the deformation of the structural plates 7 as well. The pair of these structural plates 7 should preferably have the same shape. The reason is that it is easier to mass-produce them if they are of the same shape and is more cost effective.

The intermediate member 8 is, as shown in Fig. 2, consisted of a pair of top and bottom piece members 8a and 8b, wherein each of the piece members 8a and 8b consists of a semicircular shaped nestling parts 16 provided on both ends, and an intermediate plate part 17 having a substantially U-shaped cross-section perpendicular to the axial direction, which is formed integrally as a unit with the nestling parts 16 between them. The nestling parts 16 are parts that nestle the outer circumferences of the collar members 10 provided inside the communicating holes 5 and 6 from top and bottom, while the intermediate plate part 17 is located between the two structural plates 7, as shown in Fig. 4, where a concave part 18 is formed on each of their outer side surfaces to fit with the embossed parts 13 of the structural plates 7. The top and bottom edges of the intermediate plate part 17 are each formed with an engaging edge part 21, which is to be engaged with engaging claws 23 of the external plate members 9 to be described later. The cross-section of the intermediate plate part 17 perpendicular to its axis is formed substantially U-shaped, consisting of a side plate part 19 and a bottom plate part 20, thus eliminating the internal excess thickness intending to achieve weight reduction of the connecting arm for vehicles 1.

The external plate members 9 are provided to cover the structural plates 7 and the intermediate member 8, as shown in Figs. 2 and 4, and formed on their inside walls with convex parts 22 that fit into the embossed parts 13 of the structural plates 7, and provided on their top and bottom edges with inwardly protruding edge parts 9a and 9b, the internal edges of the edge parts 9a and 9b are formed with the engaging claws 23 to engage with the engaging edge parts 21 of the intermediate member 8.

The operation of the device will be described next.

In order to assemble the connecting arm for vehicles 1 constituted in such a manner, the first step is to prepare two sets of the structural plate 7 placed inside the external plate member 9, wherein the convex part 22 of the external plate member 9 fitted with the embossed part 13 of the structural plate 7. Next place the intermediate member 8 between the two sets and make the concave part 18 of the intermediate member 8 fit with the embossed parts 13 of the structural plates 7. As the engaging claws 23 of the two external plate members 9 are made to engage with the engaging edge parts 21 of the intermediate member 8, the external plate members 9, the structural plates 7 and the intermediate member 8 are assembled into an integral assembly.

The collar members 10 are then press-fitted into the communicating holes 5 and 6 located at both ends 2 and 3 of the assembly assembled as above, and the bushings 8 having the vibration isolating members 11 are pushed into the collar members 10 to complete the connecting arm for vehicles 1.

As an alternative way to the above method, it is also possible by first press-fitting the collar members 10 into the communicating holes 5 and 6 of the structural plates 7, plate the assembly in a mold, and inject a molten plastic material into it to form the intermediate member 8 and the external plate members 9 into an integral unit.

The light-weight connecting arm for vehicles 1 can be produced in either of the above method easily and cost effectively, but most cost effective in the former assembly method, while more advantageous from the work standpoint in case of the latter, i.e., the casting method.

The connecting arm for vehicles 1 is, for example, inserted with a first shaft member J1 such as a bolt that connects with the sub frame of the vehicle into the communicating hole 5 of the end part 2, while a second shaft member J2 such as a bolt that connects with the wheel side into the communicating hole 6 of the end part 3, to be assembled as the axially straight arm of the vehicle.

Torsional, tensile or compressive forces are applied on the connecting arm for vehicles 1 mounted on a vehicle during driving from both shaft members J. For those various forces, the structural plates 7 consisting of thin steel plates provide resisting strength primarily against tensile forces, while the intermediate member 8 and the external plate members 9 both made of plastic materials provide resisting strength primarily against compressive forces.

In particular, since the structural plates 7 of the present embodiment is constituted to exist through the entire length from the first shaft member J1 on the vehicle side to the second shaft member J2 on the wheel side, it provides a large strength against tensile forces.

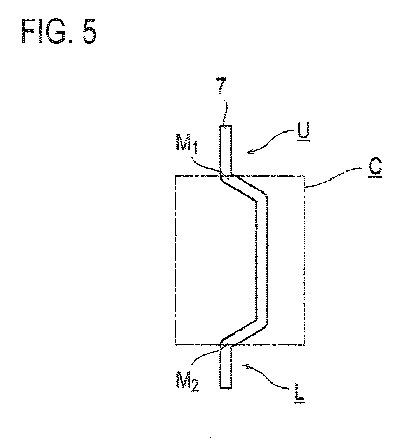

Also, since each of the structural plates 7 has the embossed part 13 formed between both ends to protrude slightly and inwardly, the middle part C where the embossed part 13 is located as shown in Fig. 5 resists against deformations, but the top part U or the bottom part L tends to deform upward or inward around the bending point M1 or M2 when torsional forces are applied.

On the other hand, since the plastic intermediate member 8 which provide strength against compression forces are provided on the inside of the structural plates 7, the inward bending deformations of the structural plates 7 are efficiently restrained by the intermediate member 8. Moreover, since the external plate members 9 are provided on the outside of the structural plates 7 and the engaging claws 23 of the external plate members 9 engage with the engaging edge parts 21 of the intermediate member 8, the outward bending deformations of the structural plates 7 are also efficiently restrained by the engagement interlocks between the external plate members 9 and the intermediate member 8. Thus, both structural plates 7 are free not only from vertical deformations, but also from outward opening deformations or inward closing deformations, so that the arm as a whole works as a well reinforced structure.

The invention should not be construed to be limited to the embodiment described above, but also rather to be capable of being modified in various ways by a person skilled in the art within the scope of the technological idea of the present invention. For example, although the above embodiment has been explained using a suspension arm for vehicles as an example, it should not be construed to be limited to it but rather to be able to be applied to various connecting arm for vehicles in a similar manner. Also, it can be used as an arm where the shaft is inserted in various angles, not just as an axially straight arm. Moreover, said structural plates 7 do not have to be constituted only as a pair, but also can be constituted of more plates so long as the intermediate member 8 is placed between them.

### [Industrial applicability]

The present invention can be used suitably as a light, deformation-resistant, easy-to-manufacture, cost-efficient, strong and reliable connecting arm for vehicles made of composite materials.

The present application is based on the Japanese Patent Application No. 2011-055474 filed on March 14, 2011, the disclosure content thereof is referenced here and made a part of hereof as a whole.

### [Description of the codes]

- 1: Connecting arm for vehicles
- 5, 6: Communicating hole
- 7: Structural plate
- 8: Intermediate member
- 8a, 8b: Piece member
- 9: External plate member
- 13: Embossed part
- 16: Nestling part
- 17: Intermediate plate part
- 18: Concave part
- 19: Side plate part
- 20: Bottom plate part
- 21: Engaging edge part
- 23: Engaging claw
- J1: First shaft member
- J2: Second shaft member

## Claims

1. A connecting arm for vehicles having a first shaft member inserted through a communicating hole provided on one end, a second shaft member inserted through a communicating hole provided on another end, subjected to torsional, tensile, or compressive forces applied by said both shaft members, which is **characterized by** comprising:
structural plates consisting of at least a pair of metal thin plates that are facing against each other and are provided at ends with communicating holes through which said first shaft member and second shaft member are inserted;
a plastic intermediate member provided between said structural plates; and
plastic external plate members provided on an outside of each one of said structural plates to sandwich each one of said structural plates with said intermediate member, wherein
an embossed part is formed on each said structural plate to protrude inwardly and a concave part formed on the external surface of said intermediate member is fitted with said embossed part.

2. The connecting arm for vehicles claimed in claim 1 **characterized in that** said embossed part is formed to extend from one of the communicating holes to the other of the communicating holes of said structural plate.

3. The connecting arm for vehicles according to claim 1 or 2 **characterized in that** said external plate member is formed inside with a convex part that fits the embossed part of said structural plate.

4. The connecting arm for vehicles according to one of claims 1 to 3 **characterized in that** said intermediate member and external members are formed integrally to cover said structural plates.

5. The connecting arm for vehicles according to one of claims 1 to 4 **characterized in that** said structural plates are formed identical to each other.

6. The connecting arm for vehicles according to one of claims 1 to 5 **characterized in that** axes of said first shaft member and said second shaft member are constituted to be parallel to each other.
